# EUROPÄISCHE PATENTANMELDUNG

(11) **EP 2 282 184 A1**
(43) Veröffentlichungstag der Anmeldung: **09.02.2011**
(21) Anmeldenummer: 09165963.1
(22) Anmeldetag: 21.07.2009
(51) Int. Cl.: G01F 23/292, G06M 9/00

(54) **Verfahren und Vorrichtung zur Überwachung des Füllstandes von einem Entnahmegut in einem Aufbewahrungsbehälter**

(71) Anmelder: Siemens Schweiz AG, 8047 Zürich (CH)
(72) Erfinder: Fischer, Michael, 8932 Mettmenstetten (CH); Sprich, Olaf, 8914 Aeugst a.A. (CH)
(74) Vertreter: Fischer, Michael

(57) **Zusammenfassung**

Erfindungsgemäss werden eine Vorrichtung und Verfahren zur Überwachung des Füllstandes von einem Entnahmegut (4, 16, 20, 24, 32), insbesondere Schütt-oder Stückgut, in einem Aufbewahrungsbehälter (2, 14, 18, 26a bis 26e, 30), offenbart, wobei die folgenden Schritte umfasst sind:
a) Definieren einer Mindestmenge für das im Aufbewahrungsbehälter (2, 14, 18, 26a bis 26e, 30) befindliche Entnahmegut (4, 16, 20, 24, 32);
b) Verknüpfen eines ersten Zustandes eines Sensors (6, 28, 36) mit dem Vorhandensein eines über die Mindestmenge hinausgehenden Füllstandes des Entnahmeguts (4, 16, 20, 24, 32);
c) Verknüpfen eines zweiten Zustandes des Sensors (6, 28, 36) mit dem Vorhandensein eines maximal der Mindestmenge entsprechenden Füllstandes des Entnahmegut (4, 16, 20, 24, 32);
d) Verknüpfen einer Sendeeinheit (8) mit dem Sensor (6, 28, 36) und Aussenden von zumindest eines mit dem zweiten Zustand des Sensors (6, 28, 36) verknüpften Füllstandssignals (12) nach einem Wechsel des Sensors (6, 28, 36) vom ersten Zustand zum zweiten Zustand.

Auf diese Weise wird der Zustand eines Sensors mit dem Erreichen oder Unterschreiten der Mindestmenge automatisch verändert und mit dem Auslösen des Füllstandssignals quittiert. Das Füllstandssignal hat daher die Funktion eines Warnsignals und kann in vorteilhafter Ausgestaltung automatisch auch einen Bestellprozess zur Anlieferung neuen Entnahmeguts anstossen. Besonders zeichnet sich diese Lösung dadurch aus, dass es keiner Überwachung oder Aktion von Mitarbeitern bedarf, um dieses Warnsignal auszulösen, weshalb diese Lösung nicht nur besonders einfach, sondern auch hochzuverlässig ist.

## Beschreibung

Die vorliegende Erfindung bezieht sich auf ein Verfahren und eine Vorrichtung zur Überwachung des Füllstandes von einem Entnahmegut in einem Aufbewahrungsbehälter.

In Produktion, Service und Unterhalt werden heutzutage direkte und indirekte Güter unterschieden. In beiden Kategorien befinden sich sogenannte C-Teile (Comodity-Teile), die sich in der Regel durch ihre hohe Anzahl und nur geringen Wert charakterisieren lassen, und MRO-Teile (Maintenance, Repair und Operations), die zum Teil auch nur in kleiner Stückzahl bei hohem Wert des Einzelteils vorhanden sind. Typischerweise handelt es sich dabei oft um verhältnismässig kleine Teile, wie beispielsweise Schrauben, Muttern, Bohrer, Fräser, Arbeitshandschuhe, einfaches Werkzeug, sonstige Verbrauchsmaterial, aber auch um steriles Besteck und andere höherwertige Gegenstände des klinischen und medizinischen Alltags. Meist ist es diesen Teilen gemeinsam, dass diese Teile nicht einzeln in einem Materialflusssystem detektiert werden und ihr Verbleib individuell verfolgt wird. Auch aus betriebswirtschaftlichen Gründen werden diese Güter oft in nicht allzu grossen Mengen bevorratet, wobei die Bevorratung meist in Regalen oder Schubladen oder Schränken mit mehrerer Kistchen oder Unterteilungen vorgenommen wird. Mitarbeiter entnehmen daraus regelmässig die für die Arbeiten benötigten Teile.

Diese C-/MRO-Teile sind - wie schon gesagt - meist wertmässig nicht von hoher Bedeutung, gehen sie aber unbemerkt aus, können so ganze Produktionsprozesse unfreiwillig zum Erliegen gebracht werden. Ziel ist es natürlich dennoch, keine allzu grossen Lagerbestände dieser Güter zu bevorraten, gleichzeitig aber sicherzustellen, dass diese Güter nie ausgehen. Idealerweise würde der Bestand an solchen Gütern streng überwacht und mit Erreichen einer vorbestimmten Mindestmenge ein Bestellvorgang zum Auffüllen des Bestandes ausgelöst, um eben rechtzeitig das Nachfüllen des entsprechenden Artikels zu beauftragen. Eine automatische Bestandsüberwachung und Feststellung eines Mindestbestandes wäre daher eine deutliche Erleichterung gegenüber den heute eingesetzten meist manuellen Verfahren durch eine optische Erfassung des Füllstandes durch Personen, die ausgehende Bestände entsprechend weiter zu melden haben. Bekannt sind hierzu heute sogenannte Kanban-Systeme, bei welchen durch ein optisches Merkmal (Beispiel Kunststoff- oder Kartonkärtchen) das Erreichen eines Rest-/Mindestbestandes angezeigt wird. In der Regel wird dann durch einen Mitarbeiter manuell ein Bestellvorgang ausgelöst, wobei das Erkennen des erreichten Rest- oder Mindestbestandes rein visuell durch eine Person vorgenommen wird.

Ebenfalls bekannt und bereits realisiert sind Systeme, bei denen unter den Aufbewahrungsbehältern, typischerweise kleine Kunststoffkistchen, eine Wiegezelle platziert wird, mit welcher der Verbrauch und das Erreichen einer Mindestmenge über eine Gewichtsmessung angezeigt wird. Diese Systeme sind aber recht komplex und sehr teuer und in der Regel auch nicht mobil einsetzbar. Auch eignen sich diese Systeme nur für bestimmte Arten von Aufbewahrungsbehältnissen und können nur schwer nachgerüstet und bei einem Wechsel des bevorrateten Artikels auch nur aufwendig umgerüstet werden.

Ausserdem sind bereits Systeme bekannt, bei denen ein Drehen des Aufbewahrungsbehälters einen am Aufbewahrungsbehälter angeordneten Permanentmagneten mit einem ortsfest angeordneten Schwingkreis in Eingriff bringt und somit als Verstimmung des Schwingkreises detektiert werden kann. Diese Einrichtung ist ebenfalls aufwendig und zum zuverlässigen Funktionieren ist stets ein wachsamer Mitarbeiter gefordert, der mit Erreichen der Rest-/Mindestmenge den Aufbewahrungsbehälter auch gedreht an seine Position stellt.

Ausgehend von diesem Stand der Technik liegt der vorliegenden Erfindung daher die Aufgabe zugrunde, ein Verfahren und eine Vorrichtung zur Überwachung des Füllstandes von einem Entnahmegut in einem Aufbewahrungsbehälter anzugeben, bei denen es weder von der Aufmerksamkeit eines Mitarbeiters noch von sonstigen visuell erfassten Füllstandserkennungen abhängt, ob ein Entnahmegut stets in der geforderten Menge für eine Prozess zur Verfügung steht.

Diese Aufgabe wird bezüglich des Verfahrens erfindungsgemäss durch ein Verfahren zur Überwachung des Füllstandes von einem Entnahmegut in einem Aufbewahrungsbehälter gelöst, welches die folgenden Schritte umfasst:
a) Definieren einer Mindestmenge für das im Aufbewahrungsbehälter befindliche Entnahmegut;
b) Verknüpfen eines ersten Zustandes eines Sensors mit dem Vorhandensein eines über die Mindestmenge hinausgehenden Füllstandes des Entnahmeguts;
c) Verknüpfen eines zweiten Zustandes des Sensors mit dem Vorhandensein eines maximal der Mindestmenge entsprechenden Füllstandes des Entnahmegut;
d) Verknüpfen einer Sendeeinheit mit dem Sensor und Aussenden von zumindest eines mit dem zweiten Zustand des Sensors verknüpften Füllstandssignals nach einem Wechsel des Sensors vom ersten Zustand zum zweiten Zustand.

Bezüglich der Vorrichtung wird diese Aufgabe erfindungsgemäss durch eine Vorrichtung zur Überwachung des Füllstandes von einem Entnahmegut, insbesondere Schütt-oder Stückgut, in einem Aufbewahrungsbehälter gelöst, umfassend:
a) eine für den Aufbewahrungsbehälter bestimmte Mindestmenge des in dem Aufbewahrungsbehälter befindlichen Entnahmeguts;
b) einen Sensor mit einem ersten Zustandes, mit dem Vorhandensein eines über die Mindestmenge hinausgehenden Füllstandes des Entnahmeguts verknüpft ist;
c) den Sensor mit einem zweiten Zustand des Sensors, mit dem das Vorhandensein eines maximal der Mindestmenge entsprechenden Füllstandes des Entnahmegut verknüpft ist;
d) eine mit dem Sensor verknüpfte Sendeeinheit, welche ein zumindest mit dem zweiten Zustand des Sensors verknüpftes Füllstandssignal nach einem Wechsel des Sensors vom ersten Zustand zum zweiten Zustand aussendet.

Auf diese Weise wird der Zustand eines Sensors mit dem Erreichen oder Unterschreiten der Mindestmenge automatisch verändert und mit dem Auslösen des Füllstandssignals quittiert. Das Füllstandssignal hat daher die Funktion eines Warnsignals und kann in vorteilhafter Ausgestaltung automatisch auch einen Bestellprozess zur Anlieferung neuen Entnahmeguts anstossen. Besonders zeichnen sich diese Lösung dadurch aus, dass es keiner Überwachung oder Aktion von Mitarbeitern bedarf, um dieses Warnsignal auszulösen, weshalb diese Lösung nicht nur besonders einfach, sondern auch hochzuverlässig ist.

Eine besonders bevorzugte Ausgestaltung der vorliegenden Erfindung kann es vorsehen, dass der Sensor ein Lichtsensor ist, der am Boden des Aufbewahrungsbehälters angeordnet ist und optional von dem Entnahmegut bedeckt wird, wobei der Lichtsensor von dem ersten Zustand "Dunkel", was einem Füllstand oberhalb der Mindestmenge entspricht, in einen Zustand "Hell" überführt wird, wenn der Füllstand die Mindestmenge erreicht oder unterschreitet. Die Abnahme des Füllstandes führt daher hier zu einer Blossdeckung des Sensors und damit zur Detektion von Umgebungslicht, was die Aussendung des Füllstandssignals automatisch auslöst.

Eine weitere besonders bevorzugte Ausgestaltung der vorliegenden Erfindung kann es vorsehen, dass der Sensor ein Lichtsensor ist, der am Boden des Aufbewahrungsbehälters angeordnet ist und von dem Entnahmegut bedeckt wird, wobei nach dem Einfüllen der Mindestmenge des Entnahmegut in den Aufbewahrungsbehälter ein lichtdichtes Zwischenelement zur Abdeckung der Mindestmenge in den Aufbewahrungsbehälter eingelegt wird, und wobei der Lichtsensor von dem ersten Zustand "Dunkel", was dem Zustand des einliegenden Zwischenelements entspricht, in den zweiten Zustand "Hell" überführt wird, wenn das Zwischenelement aus dem Aufbewahrungsbehälter entnommen oder zum Antasten der Mindestmenge angehoben wird. Um an die Restmenge zu gelangen, muss der Mitarbeiter so das Zwischenelement anheben, wodurch das Vorhandensein des Umgebungslichts am Sensor detektiert wird und der Zustandswechsel somit vorliegt. Das Aussenden des Füllstandssignals als Warnsignal ist somit zwangsläufig automatisch ausgelöst worden. Kurz gesagt könnte auch heissen: Ohne Zustandswechsel kein Zugang zur Rest-/Mindestmenge.

Typischerweise kann die Sendeeinheit als aktiver RFID-Transponder ausgeführt sein. Derartige auf dem RFID-Verfahren basierende Komponenten und Kontrolleinheiten sind heute weit verbreitet und in grosser Stückzahl preiswert verfügbar. Dementsprechend kann mit dem Empfang des Füllstandssignals an einer Kontrolleinheit ein Prozess zur Erhöhung des Füllstandes angestossen wird.

Ein weitere vorteilhafte Ausgestaltung der Erfindung kann es vorsehen, dass der Sensor ein Gassensor ist und zusammen mit der Mindestmenge in einer vorbestimmten Gasatmosphäre, deren Zusammensetzung von Umgebungsluft abweicht, gasdicht verpackt ist. Auch hier führt das Aufreissen des Verpackungsbehälters den Zustandswechsel des Gassensors herbei, da dieser nun Umgebungsluft (oder eine Komponente davon) detektiert. Die Verpackung könnte so beispielsweise unter Schutzgas (Stickstoff) erfolgen; die Detektion von Sauerstoff wird mit dem Aufreissen der Verpackung gleichgesetzt.

Eine weitere vorteilhafte Ausgestaltung der Erfindung kann es vorsehen, dass der Sensor ein Widerstandsensor ist und die Mindestmenge des Entnahmegut in einem mit einer mit dem Sensor verbundenen Stromschleife gesicherten Behältnis aufbewahrt wird. Mit dem Aufreissen des Behältnisses wird hier die Stromschleife durchtrennt, was den am Sensor erfassten Widerstand gegen unendlich sprunghaft ansteigen lässt und damit den gewünschten Zustandswechsel herbeiführt.

Ausführungsbeispiele der vorliegenden Erfindung werden nachfolgend anhand einer Zeichnung näher erläutert. Dabei zeigen:
- Figur 1: in schematischer Ansicht einen Behälter mit Schüttgut mit einer ausreichenden Menge Schüttgut a) und dem Erreichen einer Mindestmenge b);
- Figur 2: in schematischer Ansicht einen Behälter mit Montageschrauben mit einer ausreichenden Menge a) und dem Erreichen einer Mindestmenge b);
- Figur 3: in schematischer Ansicht einen Behälter mit Verbrauchsmaterial mit einer ausreichenden Menge a) und dem Erreichen einer Mindestmenge b);
- Figur 4: in schematischer Ansicht einen Stapel von Schachteln mit sterilem OP-Besteck in ausreichender Menge a) und beim Erreichen der Mindestmenge b); und

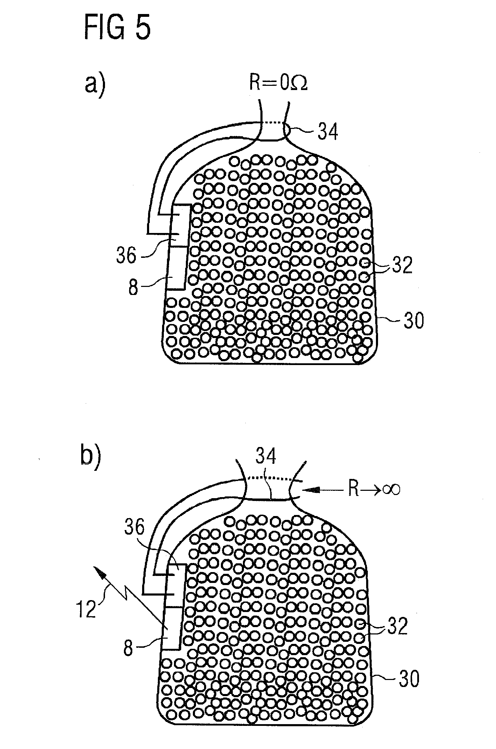

- Figur 5: einen Aufnahmebeutel mit Verbrauchsmaterial im geschlossenen Zustand a) und im geöffneten Zustand b).

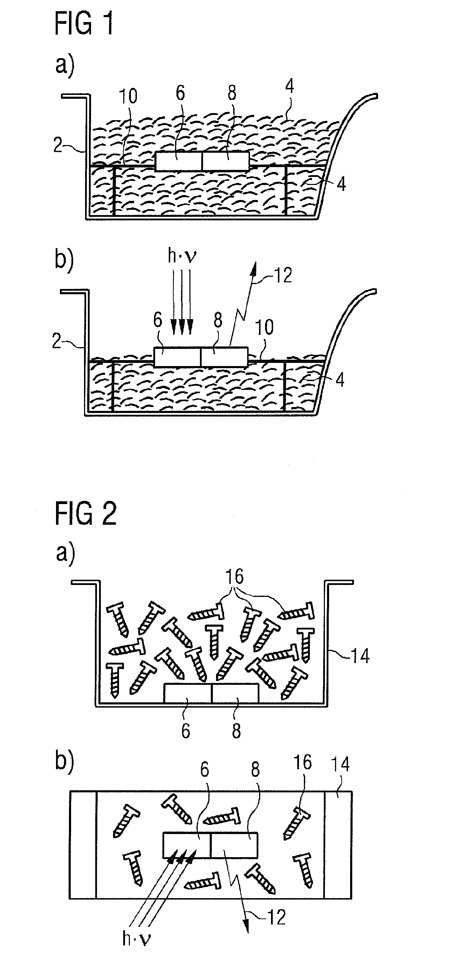

Figur 1 zeigt in schematischer Ansicht einen Behälter 2 mit Schüttgut 4 mit zwei verschiedenen Füllständen. Im Falle des Figurenteils a) befindet sich in dem Behälter eine ausreichende Menge Schüttgut 4 und im Falle des Figurenteils b) ist für den Behälter 2 eine zuvor definierte Grenze für eine Mindestmenge erreicht worden. In den Behälter 2 sind zudem ein Lichtsensor 6 und ein RFID-Transponder 8 auf einem für das Schüttgut 4 durchlässigen Rost 10 eingesetzt. Im Fall des Figurenteils a) ist nun dieser Lichtsensor 6 vollständig durch das Schüttgut 4 vom Umgebungslicht hv abgeschirmt. Der Lichtsensor 6 befindet sich in einem ersten vordefinierten Zustand "Dunkel". Mit fortschreitender Entnahme von Schüttgut 4 erreicht der Füllstand irgendwann einmal den Zustand, bei dem der Lichtsensor 6 nicht mehr vom Schüttgut 4 bedeckt ist. Der Lichtsensor wechselt dann in einen zweiten vordefinierten Zustand "Hell", weil er nun das Umgebungslicht detektiert. Die mit dem Lichtsensor 6 verfügt soweit über hier nicht weiter dargestellte Datenverarbeitungsmittel, dass der Wechsel von dem Zustand "Dunkel" in den Zustand "Hell" das Aussenden eines Füllstandssignals 12 durch den RFID-Transponder 8 auslöst. Dieses Füllstandssignal 12 hat die Funktion eines Warnsignals bei Erreichen der vordefinierten Mindestmenge. Das Füllstandssignal 12 enthält im hier vorliegenden Beispiel nun eine Angabe, um welches Schüttgut 4 es sich im vorliegenden Fall des Erreichens der Mindestmenge handelt. Mit einem hier nicht weiter dargestellten RFID-Controller wird dieses Füllstandssignal 12 empfangen und führt zur automatischen Auslösung eines Bestellvorgangs für das Schüttgut 4. Auf diese Weise ist es in vollkommen funktionssicher gewährleistet, dass immer eine für einen das Schüttgut 4 verbrauchenden Prozess ausreichende Menge an Schüttgut 4 vorhanden ist. Es bedarf so keinerlei Reaktion durch eine Person oder eine sonstige turnusmässige visuelle Prüfung des Füllstandes.

Figur 2 zeigt in schematischer Ansicht ein weiteres Ausführungsbeispiel mit einem Behälter 14, in dem Montageschrauben 16 bevorratet sind. Am Boden des Behälters 14 sind wieder der Lichtsensor 6 und der RFID-Transponder 8 angeordnet. Im Figurenteil a) sind in dem Behälter 14 so viele Montageschrauben 16 angeordnet, dass sich der Lichtsensor 6 wieder im Zustand "Dunkel" befindet und kein Umgebungslicht detektiert. Dabei sollen die wenigen hier nur eingezeichneten Montageschrauben 16 diesen Zustand repräsentieren. Im Figurenteil b) ist nun eine Aufsicht auf den Behälter 14 gezeigt, wobei die Menge der bevorrateten Schrauben nun mehr die vordefinierte Mindestmenge erreicht hat, was durch die wenigen eingezeichneten Montageschrauben 16, die sich um den Lichtsensor 6 herum befinden, repräsentiert werden soll. Im Falle des Figurenteils b) ist nun der Lichtsensor 6 nicht mehr durch eine ausreichende Menge von Montageschrauben 16 abgedeckt, wodurch er Umgebungslicht hv detektiert und in seinen zweiten vordefinierten Zustand "Hell" wechselt. Wie schon im vorangehenden Ausführungsbeispiels löst dieser Zustand "Hell" das Aussenden des Füllstandssignals 12 aus, dessen Inhalt nun mehr die Identität der ausgehenden Montageschrauben 16 umfasst. Auch hier wird somit mit dem Erfassen dieses Füllstandssignals 12 automatisch ein Prozess zum rechtzeitigen Nachbestellen der Montageschrauben 16 ausgelöst.

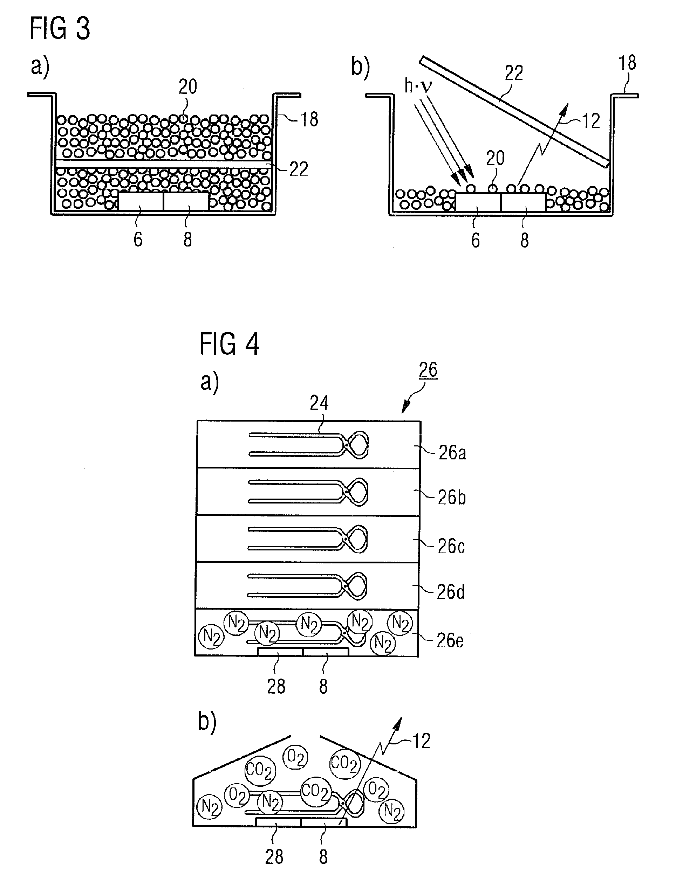

Die Figur 3 repräsentiert ein weiteres Ausführungsbeispiel, das in schematischer Ansicht einen Behälter 18 mit Verbrauchsmaterial 20 zeigt. In dem Behälter 18 befindet sich im Figurenteil a) ein eingelegtes lichtdichtes Zwischenblatt 22, das die darunter befindliche Mindestmenge des Verbrauchsmaterials 20 von der weitergehenden Menge des Verbrauchsmaterials 20 trennt und den wieder am Boden des Behälters 18 angeordneten Lichtsensor 6 von dem Umgebungslicht hν abschirmt. Der Lichtsensor 6 befindet sich somit im Zustand "Dunkel". Im Figurenteil b) ist nun das oberhalb des Zwischenblatt befindliche Verbrauchsmaterial 20 entnommen worden und das Zwischenblatt 22 ist angehoben worden (und wird entfernt werden), damit auf den vormals unterhalb des Zwischenblatts 22 angeordnete Restbestand an Verbrauchsmaterial 20 zugegriffen werden kann. Bereits mit dem Anheben des Zwischenblatts 22 detektiert der Lichtsensor 6 nun das Umgebungslicht hν und wechselt somit vom (Melde-)Zustand "Dunkel" in den (Melde-)Zustand "Hell". Mit anderen Worten heisst dies, dass auch in diesem Beispiel der das Verbrauchsmaterial entnehmende nur durch das Anheben des Zwischenblatts 22 an die Restmenge Verbrauchsmaterial 20 gelangen kann, was automatisch zur Aussendung des Füllstandssignals 12 führt und somit wieder einen Prozess zum Auffüllen des Verbrauchsmaterials 20 anstösst.

Figur 4 zeigt in schematischer Ansicht ein Ausführungsbeispiel mit einem höherwertigen Gebrauchsgut. Als Gebrauchsgut wird hier durch das Symbol einer Zange steril verpacktes OP-Besteck 24, das in einem Stapel 26 von fünf Schachteln 26a bis 26e angeliefert wird. Dabei ist das in der untersten Schachtel 26e befindliche OP-Besteck 24 unter einer Schutzatmosphäre von Stickstoff N₂ gasdicht verpackt worden. In dieser untersten Schachtel 26e befindet sich zudem ein Gassensor 28 sowie der damit gekoppelte RFID-Transponder 8. Bei geschlossener Schachtel 26e detektiert der Gassensor 28 ausschliesslich Stickstoff N₂ und befindet sich somit in seinem ersten für ihn definierten Zustand "Reiner Stickstoff". Sind nun die in den Schachteln 26a bis 26d befindlichen OP-Bestecke 24 verbraucht worden, kann das OP-Personal nur durch Öffnen der Schachtel 26e an ein weiteres OP-Besteck 24 gelangen. Mit dem Öffnen der Schachtel 26e wechselt die Gaszusammensetzung in der Schachtel 26e aber augenblicklich durch den Eintritt von Umgebungsluft, was durch die O₂- und CO₂-Symbole und den halbgeöffneten Deckel der Schachten 26e im Figurenteil b) repräsentiert werden soll. Diesen Wechsel der Gaszusammensetzung wird augenblicklich durch den Gassensor 28 detektiert, welcher folglich in den zweiten für ihn vordefinierten (Melde-)Zustand "Umgebungsluft" wechselt. Wie schon in den vorangehenden Ausführungsbeispielen führt dieser Wechsel des (Melde-)Zustands wieder zum sofortigen Aussenden des Füllstandssignals 12 durch den RFID-Transponder 8. Ein hier nicht weiter dargestelltes Warenflusssystem des Spitals löst mit dem Empfang des Füllstandssignals 12 die Nachlieferung eines neuen 5er-Stapels 26 für das OP-Besteck 24 aus. Die gebrauchten OP-Bestecke 24 können mitsamt ihrer leeren Schachten 26a bis 26e bei der Nachlieferung des neuen Stapels 26 mitgenommen und wieder sterilisiert verpackt werden, wobei im Behälter 26e wieder Stickstoff N₂ eingefüllt wird und der Gassensor 28 und der RFID-Transponder 8 wieder betriebsbereit geschaltet werden.

Ein letztes, aber dennoch den Anspruch auf Vollständigkeit ausschliessendes Ausführungsbeispiel zeigt in schematischer Darstellung einen Aufnahmebeutel 30 mit Verbrauchsmaterial 32. Der Aufnahmebeutel 30 wird mit einer Stromschleife 34 verschlossen und kann sich in hier nicht weiter dargestellter Weise innerhalb eines viel grösseren Behälters für das Verbrauchsmaterial 32 befinden. Die vom Aufnahmebeutel 30 bevorratete Menge des Verbrauchsmaterials 32 stellt hier die vorbestimmte Mindestmenge dar. Mit dem RFID-Transponder 8 ist hier ein Widerstandssensor 36 verknüpft, welcher sich bei durch die Stromschleife 34 geschlossenem Aufnahmebeutel 32 in einem ersten für ihn vordefinierten (Melde-)Zustand "Kein Widerstand" befindet. Ist nun die im Behälter befindliche Menge an Verbrauchsmaterial 32 entnommen worden, wird weiteres Verbrauchsmaterial 32 nur durch das Aufreissen des Aufnahmebeutels 30 zugänglich. Mit dem Aufreissen des Aufnahmebeutels 30 wird aber auch die Stromschleife 34 durchtrennt, worauf der Widerstandssensor im Rahmen seiner periodischen Widerstandsdetektion bei der dem Aufreissen folgenden Messung einen gegen Unendlich gehenden Widerstand detektiert und damit in den (Melde-)Zustand "Sehr hoher Widerstand" wechselt. Dieser Zustandswechsel löst - wie in den vorangehenden Ausführungsbeispielen - wieder die sofortige Aussendung des Füllstandssignals 12 durch den RFID-Transponder 8 aus. Zusätzliches Verbrauchsmaterial 32 kann so unverzüglich geordert werden.

Allen vorstehend genannten Beispielen ist somit als Ereignis für das Auslösen der Aussendung des Füllstandssignals gemeinsam, dass sich der Zustand eines wie auch immer gearteten Sensors genau dann unvermeidbar und automatisch ändert, wenn auf eine in einem Aufnahmebehältnis gelagerte vorbestimmte Mindestmenge eines Entnahmeguts zugegriffen wird. Im Rahmen des Schutzumfangs sind natürlich vielfältige weitere Ausführungsbeispiele umfasst, die stellvertretend durch die fünf vorstehend erläuterten Ausführungsbeispiele repräsentiert sind. Besonders wichtig an der vorliegenden Erfindung ist es dabei, dass es nicht der Aufmerksamkeit von Personal überlassen bleibt, wann eine Nachbestellung für das Entnahmegut auszulösen ist, sondern dass dieser Nachbestellvorgang mit dem Zugriff auf die vorbestimmte Mindestmenge unvermeidbar und somit im positiven Sinne gezwungenermassen durch den damit eintretenden Wechsel des Meldezustands eines diesbezüglichen Sensors und das daran gekoppelte Aussenden eines Warnsignals (Füllstandssignals) ausgelöst werden kann.

## Patentansprüche

1. Verfahren zur Überwachung des Füllstandes von einem Entnahmegut (4, 16, 20, 24, 32), insbesondere Schütt-oder Stückgut, in einem Aufbewahrungsbehälter (2, 14, 18, 26a bis 26e, 30), umfassend die folgenden Schritte:
a) Definieren einer Mindestmenge für das im Aufbewahrungsbehälter (2, 14, 18, 26a bis 26e, 30) befindliche Entnahmegut (4, 16, 20, 24, 32);
b) Verknüpfen eines ersten Zustandes eines Sensors (6, 28, 36) mit dem Vorhandensein eines über die Mindestmenge hinausgehenden Füllstandes des Entnahmeguts (4, 16, 20, 24, 32);
c) Verknüpfen eines zweiten Zustandes des Sensors (6, 28, 36) mit dem Vorhandensein eines maximal der Mindestmenge entsprechenden Füllstandes des Entnahmegut (4, 16, 20, 24, 32);
d) Verknüpfen einer Sendeeinheit (8) mit dem Sensor (6, 28, 36) und Aussenden von zumindest eines mit dem zweiten Zustand des Sensors (6, 28, 36) verknüpften Füllstandssignals (12) nach einem Wechsel des Sensors (6, 28, 36) vom ersten Zustand zum zweiten Zustand.

2. Verfahren nach Anspruch 1,
**dadurch gekennzeichnet, dass**
der Sensor ein Lichtsensor (6) ist, der am Boden des Aufbewahrungsbehälters (14, 18) angeordnet ist und von dem Entnahmegut (16, 20) bedeckt wird, wobei der Lichtsensor (6) von dem ersten Zustand "Dunkel", was einem Füllstand oberhalb der Mindestmenge entspricht, in einen Zustand "Hell" überführt wird, wenn der Füllstand die Mindestmenge erreicht oder unterschreitet.

3. Verfahren nach Anspruch 1,
**dadurch gekennzeichnet, dass**
der Sensor ein Lichtsensor (6) ist, der am Boden des Aufbewahrungsbehälters (14) angeordnet ist, wobei nach dem Einfüllen der Mindestmenge des Entnahmeguts (20) in den Aufbewahrungsbehälter (14) ein lichtdichtes Zwischenelement (22) zur Abdeckung der Mindestmenge in den Aufbewahrungsbehälter (14) eingelegt wird, und wobei der Lichtsensor (6) von dem ersten Zustand "Dunkel", was dem Zustand des einliegenden Zwischenelements (22) entspricht, in den zweiten Zustand "Hell" überführt wird, wenn das Zwischenelement (22) aus dem Aufbewahrungsbehälter (14) entnommen oder zum Antasten der Mindestmenge angehoben wird.

4. Verfahren nach einem der Ansprüche 1 bis 3,
**dadurch gekennzeichnet, dass**
die Sendeeinheit ein aktiver RFID-Transponder (8) ist.

5. Verfahren nach einem der Ansprüche 1 bis 4,
**dadurch gekennzeichnet, dass**
mit dem Empfang des Füllstandssignals (12) an einer Kontrolleinheit ein Prozess zur Erhöhung des Füllstandes angestossen wird.

6. Verfahren nach einem der Ansprüche 1 bis 5,
**dadurch gekennzeichnet, dass**
der Sensor ein Gassensor (28) ist und zusammen mit der Mindestmenge in einer vorbestimmten Gasatmosphäre, deren Zusammensetzung von Umgebungsluft abweicht, gasdicht verpackt ist.

7. Verfahren nach einem der Ansprüche 1 bis 6,
**dadurch gekennzeichnet, dass**
der Sensor ein Widerstandsensor (36) ist und die Mindestmenge des Entnahmeguts (32) in einem mit einer mit dem Sensor (36) verbundenen Stromschleife (34) gesicherten Behältnis (30) aufbewahrt wird.

8. Vorrichtung zur Überwachung des Füllstandes von einem Entnahmegut, insbesondere Schütt-oder Stückgut, in einem Aufbewahrungsbehälter (2, 14, 18, 26a bis 26e, 30), umfassend:
a) eine für den Aufbewahrungsbehälter (2, 14, 18, 26a bis 26e, 30) bestimmte Mindestmenge des in dem Aufbewahrungsbehälter (2, 14, 18, 26a bis 26e, 30) befindlichen Entnahmeguts (4, 16, 20, 24, 32);
b) einen Sensor (6, 28,36) mit einem ersten Zustandes, mit dem Vorhandensein eines über die Mindestmenge hinausgehenden Füllstandes des Entnahmeguts (4, 16, 20, 24, 32) verknüpft ist;
c) den Sensor (6, 28, 36) mit einem zweiten Zustand des Sensors (6, 28, 26), mit dem das Vorhandensein eines maximal der Mindestmenge entsprechenden Füllstandes des Entnahmeguts (4, 16, 20, 24, 32) verknüpft ist;
d) eine mit dem Sensor (6, 28, 36) verknüpfte Sendeeinheit (8), welche ein zumindest mit dem zweiten Zustand des Sensors (6, 28, 36) verknüpftes Füllstandssignal (12) nach einem Wechsel des Sensors (6, 28, 36) vom ersten Zustand zum zweiten Zustand aussendet.

9. Vorrichtung nach Anspruch 8,
**dadurch gekennzeichnet, dass**
der Sensor ein Lichtsensor (6) ist, der am Boden des Aufbewahrungsbehälters (14, 18) angeordnet ist und von dem Entnahmegut bedeckbar ist, wobei der Lichtsensor (6) von dem ersten Zustand "Dunkel", was einem Füllstand oberhalb der Mindestmenge entspricht, in einen Zustand "Hell" überführbar ist, wenn der Füllstand die Mindestmenge erreicht oder unterschreitet.

10. Vorrichtung nach Anspruch 8,
**dadurch gekennzeichnet, dass**
der Sensor ein Lichtsensor (6) ist, der am Boden des Aufbewahrungsbehälters (14) angeordnet ist, wobei nach dem Einfüllen der Mindestmenge des Entnahmeguts (20) in den Aufbewahrungsbehälter (14) ein lichtdichtes Zwischenelement (22) zur Abdeckung der Mindestmenge und des Lichtsensors (6) in den Aufbewahrungsbehälter (14) eingelegt wird, und wobei der Lichtsensor (6) von dem ersten Zustand "Dunkel", was dem Zustand des einliegenden Zwischenelements (22) entspricht, in den zweiten Zustand "Hell" überführbar ist, wenn das Zwischenelement (22) aus dem Aufbewahrungsbehälter (14) entnommen oder zum Antasten der Mindestmenge angehoben wird.

11. Vorrichtung nach einem der Ansprüche 8 bis 10,
**dadurch gekennzeichnet, dass**
die Sendeeinheit ein aktiver RFID-Transponder (8) ist.

12. Vorrichtung nach einem der Ansprüche 8 bis 11,
**dadurch gekennzeichnet, dass**
mit dem Empfang des Füllstandssignals (12) an einer Kontrolleinheit ein Prozess zur Erhöhung des Füllstandes anstossbar ist.

13. Vorrichtung nach einem der Ansprüche 8 bis 12,
**dadurch gekennzeichnet, dass**
der Sensor ein Gassensor (28) ist und zusammen mit der Mindestmenge in einer vorbestimmten Gasatmosphäre, deren Zusammensetzung von Umgebungsluft abweicht, gasdicht verpackt ist.

14. Vorrichtung nach einem der Ansprüche 8 bis 13,
**dadurch gekennzeichnet, dass**
der Sensor ein Widerstandsensor (36) ist und die Mindestmenge des Entnahmeguts (32) in einem mit einer mit dem Sensor verbundenen Stromschleife (34) gesicherten Behältnis (30) aufbewahrt wird.
